# EUROPÄISCHE PATENTSCHRIFT

(11) **EP 3 728 831 B1**
(45) Veröffentlichungstag und Bekanntmachung des Hinweises auf die Patenterteilung: **22.09.2021**
(21) Anmeldenummer: 18836343.6
(22) Anmeldetag: 19.12.2018
(51) Int. Cl.: F03B 17/06, F03D 3/00, F03D 3/06

(54) **TURBINE**
TURBINE
TURBINE

(30) Priorität: 19.12.2017 CH 15542017
(43) Veröffentlichungstag der Anmeldung: 28.10.2020
(73) Patentinhaber: Isik, Hasan Hüseyin, 9500 Wil SG 1 (CH)
(72) Erfinder: Isik, Hasan Hüseyin, 9500 Wil SG 1 (CH)
(74) Vertreter: Keller Schneider Patent- und Markenanwälte AG (Zürich)
(86) Internationale Anmeldenummer: PCT/CH2018/000053
(87) Internationale Veröffentlichungsnummer: WO 2019/119163

(56) Entgegenhaltungen:
- WO-A2-2010/063131
- CH-A2- 704 066
- CH-A2- 707 729
- US-A- 302 769
- US-A- 1 109 839
- US-A1- 2014 217 738

## Beschreibung

Die Erfindung betrifft eine Turbine, insbesondere eine Wasserturbine zur Energiegewinnung in Fliessgewässern oder eine Windturbine.

Turbinen zur Energiegewinnung, insbesondere auch Turbinen in Wasserkraftwerken sind bekannt Sie weisen zumeist einen senkrecht zur Fliessrichtung des Gewässers angeordneten Rotor mit daran befindlichen, rotierbaren Turbinenschaufeln auf. Der Anstellwinkel der Turbinenschaufeln ist ggf. in Grenzen einstellbar und ist während
des Betriebes unverändert.
Bekannt sind ebenfalls Antriebsräder für Mahlwerke, Hammerwerke und
Antriebsräder für Flussschiffe mit jeweils festen Schaufeln.

Windmühlen mit schwenk- oder verstellbaren Schaufelelementen sind aus den US 3938907 und US 4468169 bekannt

Die WO-A-2010063131 zeigt eine Wasserturbine, die in ihrer Grundform zylinderförmig und mit Schaufeln versehen ist, die parallel zu einer Achse der Turbine angeordnet sind. Diese Schaufeln sind schwenkbar in Gelenken zwischen Turbinenrädern an deren Aussenumfang angeordnet Bei einer weiteren Turbine gemäss EP 2370691 B1 sind die Aussenkanten von Schaufeln mit einem auftriebsfördernden, insbesondere aufblasbaren Element versehen und gemäss CH 707729 A2 oder CH 706300 A2 können die Schaufeln an ihrer Innenseite auch mit einem Gegengewicht versehen sein.

Aus der CH 704066 A2 ist weiterhin bekannt, bei einer solchen Turbine die Turbinenschaufeln mit einer zusätzlichen mechanischen Wirkverbindung zu koppeln. Die mechanische Wirkverbindung wird mittels einer verschieblich über die Längsachse der Turbine geführten Stange erreicht, die entsprechend ein Schaufelpaar miteinander gekoppelt führt. Ein Schaufelpaar ist jeweils durch die sich auf einer Durchmesserlinie gegenüberliegenden Schaufeln gebildet. Die Stangen sollen die Öffnungs- und Schliessbewegung der Schaufeln unterstützen.

Aus der US1109839A ist eine Turbine mit beweglichen Schaufeln bekannt, welche ausserhalb der Turbine über nach innen verlängerte Wirkarme verfügen. Diese sollten das Öffnen der Schaufeln an einstellbaren Stellen unterstützen.

Der Erfindung liegt nun die Aufgabe zugrunde, eine solche Turbine, insbesondere eine Turbine zur Energiegewinnung in Fliessgewässern oder strömender Luft gegenüber dem Stand der Technik zu verbessern und um mit einfachen Mitteln einen vergleichsweise hohen Wirkungsgrad zu ermöglichen.

Die Aufgabe ist mit den Merkmalen des Patentanspruchs 1 gelöst.

Die einzelnen Schaufeln einer Turbine sind am äusseren Umfang eines Turbinenrades gelenkig angeordnet. Sie schwenken unter Einwirkung des fliessenden oder strömenden Mediums (Wasser oder Luft) radial nach aussen und klappen in Gegenrichtung (der Fliess- oder Strömungsrichtung abgewandte Seite) wieder nach innen, dabei bevorzugt den Mantel der/des Turbinenrades bildend.

Die Schaufeln sind im Wesentlichen L-förmig gestaltet, wobei ein langer Schenkel der Schaufel bevorzugt entsprechend des Radius des Turbinenmantels gebogen ist. Der kurze Schenkel ist innerhalb des Mantels gelegen und weist entgegen der Drehrichtung der Turbine. Er ist so angeordnet, dass er bei Drehung der Turbine mit mindestens einem ortsfesten, innerhalb des Mantels angeordneten Element korrespondiert. Erfindungsgemäss wird das Aufrichten/Ausklappen der Schaufeln bei Berührung des ortsfesten Elements durch den kurzen Schenkel unterstützt.

Bevorzugte Ausführungsformen der Turbine sind in den abhängigen Ansprüchen offenbart.

Das mindestens eine ortsfeste Element ist als Klinke ausgebildet und in einem Bereich von ca. 11.00 Uhr und/oder 09.30 Uhr angeordnet.

Der Anstellwinkel der Schaufeln beträgt 0° bis ca. 90° zur Mantellinientangente. Entsprechend der wesentlichen Fliessrichtung oder Fliesshöhe können die Schaufeln im oberen oder/und im unteren Teil der Turbine ausschwenken.

Weiterhin kann an der Aussenkante in Achsrichtung der Turbine zumindest an einigen Schaufeln ein aufblasbares Element angeordnet sein, z. B. in Form eines Schlauches oder einzelner Bälle. Zu Beginn oder während des Ausschwenkens der Schaufeln kann das aufblasbare Element mit Luft o. a. Gasen resp. Edelgasen gefüllt werden um das ausschwenken zu forcieren.

Eine Edelgasfüllung könnte z. B. mit Helium erfolgen, insbesondere bei Anwendung der Erfindung als Windturbine.

In der Gegenrichtung wird durch ablassen der Luft das einklappen der Schaufeln begünstigt. Möglich ist es dabei auch, das aufblasbare Element nur im Bereich der Aussenkanten (nahe zum Turbinenrad) anzuordnen und nicht über die gesamte Länge der Schaufeln.

Anstelle einer Gasfüllung können die Elemente in Form von Gewichten ausgebildet sein und im unteren Bereich die Öffnung der Schaufeln forcieren.

Die langen Schenkel der Schaufeln entsprechen in ihrer Aussenform einem Teil der Mantelfläche eines Zylinders. Sie können an der Innenseite noch Leitgatter aufweisen, die einstellbar oder feststehend angeordnet sind.

Bevorzugt weist die Turbine 4-16 Schaufeln auf.

Es ist ebenfalls denkbar, mehrere Turbinen nebeneinander und/oder übereinander anzuordnen, z. B. in grösseren Fliessgewässern oder im Meer.

Die Erfindung ist aber, bevorzugt unter Einbeziehung von Hilfsaggregaten auch als Pumpe, Wasserpumpe, Schiffsmotor o. a. verwendbar.

Die Erfindung wird nachfolgend in einem Ausführungsbeispiel anhand einer Zeichnung näher beschrieben. In der Zeichnung zeigen die
- Fig. 1:: eine erfindungsgemässe Turbine in Seitenansicht und
- Fig. 2:: Details einer Schaufel der Turbine nach Fig. 1.

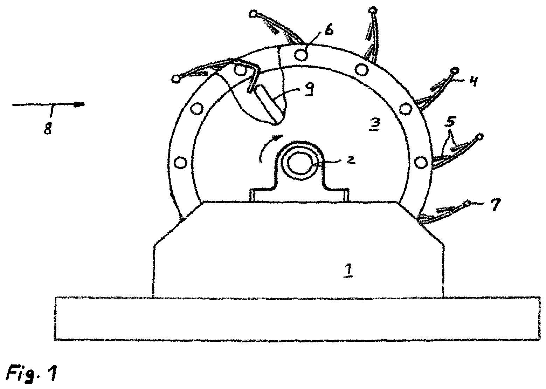

In einer nicht näher dargestellten Lagerung 1 ist eine erfindungsgemässe Turbine, ausgebildet als Wasserturbine, um ihre Achse 2 drehbar und gelagert aufgenommen (Fig. 1). Die Richtung der Achse 2 liegt dabei etwa parallel zur Wasserlinie eines Fliessgewässers (und quer zur Strömungsrichtung 8 des Fliessgewässers), wobei die Turbine horizontal und vollständig unter Wasser angeordnet ist.

Die Turbine ist in ihrer Grundform zylindrisch, mit je einem Turbinenrad 3 an den Stirnflächen des Zylinders. Der Mantel der Turbine ist durch zwölf Schaufeln 4 (bei eingeklappter Lage) gebildet, die schwenkbar in Drehgelenken 6 der Turbinenräder 3 angeordnet sind. Die Drehgelenke 6 sind entsprechend nahe am Umfang der Turbinenräder 3 angebracht.

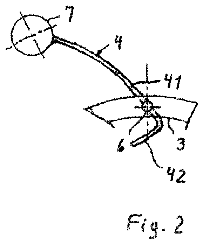

Die Schaufeln 4 sind im Wesentlichen L-förmig gestaltet (Fig. 2), wobei ein langer Schenkel 41 der Schaufel 4 bevorzugt entsprechend des Radius des Turbinenmantels gebogen ist. Der kurze Schenkel 42 ist innerhalb der Mantellinie gelegen und weist entgegen der Drehrichtung der Turbine. Er ist so angeordnet, dass er bei Drehung der Turbine mit mindestens einer ortsfesten, innerhalb des Mantels angeordneten, Klinke 9 korrespondiert.

Erfindungsgemäss wird das Aufrichten/Ausklappen der Schaufeln 4 bei Berührung der Klinke 9 durch den kurzen Schenkel 42 unterstützt (Fig. 1). Die Klinke 9 ist im Beispiel so angeordnet, dass ihre Spitze, wie ein Uhrzeiger, auf etwa 11.00 Uhr zeigt.

Die Schaufeln 4 sind im Beispiel an ihrer Innenseite mit einem Leitgatter 5 versehen. An der Aussenkante jeder Schaufel 4 ist im Beispiel zusätzlich ein in Achsrichtung verlaufender und mit Luft aufblasbarer Schlauch 7 oder dergleichen Element angeordnet sein. Die Luft wird in diesem Fall mittels einer nicht dargestellten Versorgungseinheit zu- und abgeführt.

Die Schaufeln 4 schwenken aus, sobald ihre Lage etwa parallel zur Fliessrichtung 8 ist und der kurze Schenkel 42 die Klinke 9 berührt.

Nach einer Drehung auf ca. 270° ist eine Schaufel 4 wieder vollständig eingeklappt. Die Wasserhöhe kann beliebig sein und die jeweils obere Schaufel kann sich bei Drehung der Turbine auch knapp oberhalb des Wasserspiegels befinden.

### Bezugszeichen

- 1: Lagerung
- 2: Achse
- 3: Turbinenrad
- 4: Schaufel
- 5: Leitgatter
- 6: Drehgelenk
- 7: Schlauch
- 8: Strömungsleitung
- 9: Klinke
- 41: langer Schenkel
- 42: kurzer Schenkel

## Patentansprüche

1. Turbine, insbesondere zur Energiegewinnung in strömender Luft oder in Fliessgewässern die in ihrer Grundform zylinderförmig ist und die mit Schaufeln versehen ist, die parallel zu einer Achse (2) der Turbine angeordnet sind, wobei die Schaufeln (4) schwenkbar in Drehgelenken (6) am Aussenumfang mindestens eines Turbinenrades (3) angeordnet sind, wobei die Schaufeln (4) im Wesentlichen L-förmig sind, wobei jeweils ein langer Schenkel (41) der Schaufeln (4) bevorzugt entsprechend des Radius des Turbinenmantels gebogen ist und jeweils ein kurzer Schenkel (42) innerhalb der Mantellinie der Turbine gelegen ist, **dadurch gekennzeichnet, dass** im Mantel der Turbine mindestens eine Klinke (9) ortsfest angeordnet ist, die auf etwa 11.00 Uhr und/oder auf etwa 09.30 Uhr weisend angeordnet ist und so angeordnet ist, dass sie bei Drehung der Turbine vom kurzen Schenkel (42) der Schaufeln (4) berührbar ist.

2. Turbine nach Anspruch 1, **dadurch gekennzeichnet, dass** sie 4 bis 16 Schaufeln (4) umfasst.

3. Turbine nach einem der Ansprüche 1 oder 2, **dadurch gekennzeichnet, dass** mindestens eine Schaufel (4) entlang ihrer Aussenkante parallel zur Achse (2) mit einem aufblasbaren Element im Bereich der Schaufelenden versehen ist.

## Claims

1. A turbine, in particular for generating power in flowing air or in watercourses, which is cylindrical in its basic shape and which is provided with blades, which are arranged in parallel to a shaft (2) of the turbine, wherein the blades (4) are arranged pivotally in swivel joints (6) on the outer circumference of at least one turbine wheel (3), wherein the blades (4) are essentially L-shaped, wherein in each case a long leg (41) of the blades (4) is preferably bent in a manner corresponding to the radius of the turbine shroud and in each case a short leg (42) is disposed within the shroud line of the turbine, **characterized in that** at least one handle (9) is arranged stationarily in the shroud of the turbine, which handle (9) is arranged pointing to ca. 11:00 o'clock and/or to ca. 9:30 o'clock and is arranged in such a way that it can be touched by the short leg (42) of the blades (4) as the turbine turns.

2. The turbine according to Claim 1, **characterized in that** it comprises 4 to 16 blades (4).

3. The turbine according to either one of Claims 1 or 2, **characterized in that** at least one blade (4) is provided with an inflatable element along its outside edge in parallel to the shaft (2) in the area of the blade ends.

## Revendications

1. Turbine, notamment destinée à récupérer de l'énergie dans de l'air circulant ou dans des cours d'eau, qui est de forme de base cylindrique et qui est munie d'aubes, qui sont placées à la parallèle d'un axe (2) de la turbine, les aubes (4) étant placées en étant pivotantes dans des articulations rotatives (6) sur la circonférence extérieure d'au moins une roue de turbine (3), les aubes (4) étant sensiblement en forme de L, chaque fois une branche longue (41) des aubes (4) étant recourbée de préférence en fonction du rayon de l'enveloppe de turbine et chaque fois une branche courte (42) étant située à l'intérieur de la ligne d'enveloppe de la turbine, **caractérisée en ce que** dans l'enveloppe de la turbine, au moins un loquet (9) qui est placé sur environ 11 h et/ou sur environ 9 h 30 et qui est placé de telle sorte que lors d'une rotation de la turbine, il soit susceptible d'être contacté par la branche courte (42) des aubes (4) est placé de manière stationnaire.

2. Turbine selon la revendication 1, **caractérisée en ce qu'**elle comprend de 4 à 16 aubes (4).

3. Turbine selon l'une quelconque des revendications 1 ou 2, **caractérisée en ce que** le long de son-arête extérieure, au moins une aube (4) est munie à la parallèle de l'axe (2) d'un élément gonflable dans la zone des extrémités des aubes.
